# EUROPÄISCHE PATENTANMELDUNG

(11) **EP 4 793 219 A1**
(43) Veröffentlichungstag der Anmeldung: **19.08.2026**
(21) Anmeldenummer: 25157647.6
(22) Anmeldetag: 13.02.2025
(51) Int. Cl.: B66C 1/66, F16G 15/06, B60P 7/08

(54) **RINGBOCK**

(71) Anmelder: Pewag Austria GmbH, 8605 Kapfenberg (AT)
(72) Erfinder: Ivanic, Ranko, 8600 Bruck an der Mur (AT)
(74) Vertreter: Patentanwaltskanzlei Matschnig & Forsthuber OG

(57) **Zusammenfassung**

Ringbock (10), welcher Folgendes umfasst:
- eine Ringlasche (100), welche ein erstes und ein zweites Halteelement (100a, 100b) umfasst,
- einen ersten und einen zweiten Befestigungsbock (200a, 200b) zur Lagerung der Ringlasche (100) um eine Schwenkachse (SA), wobei die Befestigungsböcke (200a, 200b) jeweils ein Haltelager (300a, 300b) für die Halteelemente (100a, 100b) aufweisen, wobei das erste Halteelement (100a) eine Haltenase (110a) aufweist, und wobei der erste Befestigungsbock (200a) eine Führungsnut (210a) umfasst, welche mit der Haltenase (110a) des ersten Haltelements (100a) korrespondiert, sodass in einer Einführstellung (ES) der Ringlasche (100) das erste Haltelement (100a) in das Haltelager (300a) einführbar ist, sodass die Ringlasche (100) in eine eingesetzte Position (EP) in dem Haltelager (300a) bringbar ist, wobei in der eingesetzten Position (EP) durch Schwenken der Ringlasche (100) um die Schwenkachse (SA) die Ringlasche (100) in eine Montageposition (MP) überführbar ist, wobei beim Überführen der Ringlasche (100) von der eingesetzten Position in die Montageposition die Haltenase in die Führungsnut des ersten Befestigungsbocks derart eingreift, dass die Haltenase (110a) in der Führungsnut (210a) führbar ist, sodass die Führungsnut (210a) in Kombination mit der Haltenase (110a) in der Montageposition (MP) der Ringlasche (100) die Ringlasche (100) gegen eine Bewegung entlang der Schwenkachse (SA) sichert.

## Beschreibung

Die Erfindung betrifft einen Ringbock zum Anschlagen, Heben und/oder Zurren von Lasten, wobei der Ringbock Folgendes umfasst:
- eine Ringlasche zum Befestigen von Lasten, welche Ringlasche ein erstes Halteelement und ein zweites Halteelement umfasst, welche sich von der Ringlasche in entgegengesetzter Richtung entlang einer gemeinsamen Schwenkachse erstrecken, sowie
- einen ersten Befestigungsbock und einen zweiten Befestigungsbock zur Lagerung der Ringlasche um eine Schwenkachse, wobei die Befestigungsböcke an einem Gut befestigbar sind, und wobei die Befestigungsböcke jeweils ein Haltelager für die um die Schwenkachse schwenkbaren Halteelemente der Ringlasche aufweisen.

Die Erfindung betrifft ebenso ein Verfahren zur Montage eines erfindungsgemäßen Ringbocks.

Im Bereich der Hebetechnik sind schweißbare Anschlagpunkte, insbesondere sogenannte Ringböcke, essenzielle Komponenten für das sichere Anheben und Transportieren schwerer Lasten. Der Stand der Technik umfasst verschiedene Lösungen, bei denen der Ring in einer Halterung gelagert ist, um eine gewisse Beweglichkeit zu gewährleisten. Allerdings weisen bekannte Systeme mehrere Nachteile auf. So erfordern viele Konstruktionen separate Sicherungselemente, um den Ring in seiner Position zu halten, was zu einem erhöhten Montageaufwand führt und zusätzliche Bauteile erfordert. Dies kann nicht nur die Fertigungskosten steigern, sondern auch potenzielle Schwachstellen in Form von Verschleiß oder Spiel in der Sicherung mit sich bringen. Zudem können herkömmliche Sicherungssysteme unter hohen Belastungen versagen oder sich lösen, was die Sicherheit der Anwendung beeinträchtigt.

Aus der DE 102009040524 A1 ist ein Ringbock zum Anschlagen, Heben und/oder Zurren von Lasten bekannt, der eine Ringlasche sowie Befestigungsböcke umfasst. Die Montage der Ringlasche in den Befestigungsböcken erfordert jedoch separate Befestigungselemente oder zusätzliche Sicherungselemente (in eigens geformte Teilvolumina einsetzbare Befestigungsstifte), um die Ringlasche gegen eine axiale Bewegung entlang der Schwenkachse zu sichern. Dies kann zu einem erhöhten Montageaufwand führen und die Handhabung erschweren. Zudem besteht die Gefahr, dass sich diese separaten Sicherungselemente mit der Zeit lösen oder verloren gehen, was die Betriebssicherheit beeinträchtigen kann.

### Aufgabe der Erfindung

Die vorliegende Erfindung hat daher die Aufgabe, einen Ringbock bereitzustellen, der eine vereinfachte Montage ermöglicht, ohne dass separate Sicherungselemente oder zusätzliche Befestigungsteile erforderlich sind. Zudem soll die axiale Sicherung der Ringlasche in den Befestigungsböcken auf einfache und zuverlässige Weise gewährleistet werden.

### Lösung der Aufgabe

Die Erfindung löst die gestellte Aufgabe dadurch, dass das erste Halteelement der Ringlasche eine Haltenase aufweist, welche sich ausgehend von dem ersten Halteelement radial zur Schwenkachse erstreckt, und wobei der erste Befestigungsbock eine Führungsnut umfasst, welche mit der Haltenase des ersten Haltelements derart korrespondiert, dass in einer Einführstellung der Ringlasche das erste Haltelement mit der Haltenase in das Haltelager des ersten Befestigungsbocks einführbar ist, sodass die Ringlasche in eine eingesetzte Position in dem Haltelager bringbar ist, wobei in der eingesetzten Position der Ringlasche in dem Haltelager durch Schwenken der Ringlasche um die Schwenkachse die Ringlasche in eine Montageposition überführbar ist, wobei beim Überführen der Ringlasche von der eingesetzten Position in die Montageposition die Haltenase in die Führungsnut des ersten Befestigungsbocks derart eingreift, dass die Haltenase in der Führungsnut führbar ist, sodass die Führungsnut in Kombination mit der Haltenase in der Montageposition der Ringlasche die Ringlasche gegen eine Bewegung entlang der Schwenkachse sichert.

Der erfindungsgemäße Ringbock umfasst eine Ringlasche, die mit Halteelementen versehen ist, die sich entlang einer gemeinsamen Schwenkachse erstrecken. Eine Haltenase an mindestens einem Halteelement greift in eine korrespondierende Führungsnut eines Befestigungsbockes ein. Dies ermöglicht eine Montage der Ringlasche in einer Einführstellung und deren anschließende Sicherung in einer Montageposition durch eine einfache Schwenkbewegung.

Dadurch wird die Ringlasche automatisch gegen eine axiale Bewegung entlang der Schwenkachse gesichert, ohne dass zusätzliche Befestigungselemente erforderlich sind. Diese Konstruktion erleichtert die Montage, reduziert den Montageaufwand und erhöht die Betriebssicherheit, da keine separaten Sicherungselemente verwendet werden müssen, die sich lösen oder verloren gehen könnten.

Durch den Verzicht auf separate Befestigungs- oder Sicherungselemente zur axialen Fixierung der Ringlasche wird die Konstruktion vereinfacht und der Montageaufwand reduziert. Die Nutzung der Haltenase und der Führungsnut ermöglicht eine besonders zeiteffiziente und unkomplizierte Montage. Zudem wird die Betriebssicherheit durch eine integrierte Sicherungsfunktion erhöht, da keine losen Teile vorhanden sind, die sich lösen oder verloren gehen könnten. Dies führt gleichzeitig zu einem geringeren Wartungsaufwand, da keine zusätzlichen Bauteile ersetzt oder nachjustiert werden müssen.

Ein weiterer Vorteil der Gestaltung der Haltenase besteht darin, dass der erste Befestigungsbock vollständig an das Gut befestigt, insbesondere geschweißt, werden kann, bevor die Ringlasche und der zweite Befestigungsbock befestigt werden. Dadurch hat - im Falle, dass die Befestigungsböcke angeschweißt werden - der Schweißer optimalen Zugang zur Schweißstelle, ohne von Ringlasche in irgendeiner Weise behindert zu werden. Auch die Reinigung der Schweißstelle am ersten Befestigungsbock wird dadurch erleichtert.

Das Gut, an dem die Befestigungsböcke des Ringbocks befestigt werden, kann verschiedene Formen und Anwendungen aufweisen. Dazu zählen insbesondere Stahlträger oder Stahlkonstruktionen, wie sie in der Bauindustrie oder im Maschinenbau zum Einsatz kommen, um schwere Lasten sicher zu heben oder zu sichern. Ebenso kann es sich um Transport- und Hebevorrichtungen wie Container, Hebegestelle oder Montageplattformen handeln, bei denen der Ringbock für das Heben und Verzurren von Lasten montiert wird. Weitere Anwendungsbereiche umfassen Schiffsrümpfe oder Offshore-Strukturen, an denen der Ringbock zur Befestigung von Lasten eingesetzt wird, sowie Maschinengehäuse oder - rahmen, die eine sichere Handhabung in industriellen Anlagen ermöglichen. Zudem eignet sich die Befestigung an Fahrzeugen oder Anhängern zur Sicherung schwerer Lasten während des Transports. Auch Betonfundamente oder Betonträger können als Befestigungsbasis dienen, beispielsweise für temporäre Hebepunkte in der Bauindustrie. Schließlich kann der Ringbock auch an Kranträgern oder Lastaufnahmemitteln angebracht werden, um eine sichere Lastaufnahme bei Krananlagen oder anderen Hebesystemen zu gewährleisten. Je nach Anwendung kann das Gut aus verschiedenen Materialien bestehen, wobei die Befestigungsmethode - beispielsweise durch Schweißen oder Schrauben - entsprechend angepasst wird.

Es kann vorgesehen sein, dass der erste und/oder der zweite Befestigungsbock mittels Schweißen an dem Gut befestigbar ist. Dadurch wird eine erhöhte Stabilität und Dauerhaftigkeit der Verbindung gewährleistet, da geschweißte Befestigungsböcke keine zusätzlichen Verbindungselemente wie Schrauben oder Bolzen benötigen, die sich mit der Zeit lockern könnten.

Es kann vorgesehen sein, dass das zweite Haltelement eine Haltenase umfasst, welche sich ausgehend von dem zweiten Haltelement radial zur Schwenkachse erstreckt. Dadurch kann eine zusätzliche axiale Sicherung ermöglicht werden, die eine noch robustere Befestigung der Ringlasche gewährleistet und die Montage symmetrischer gestaltet, was die Handhabung erleichtert.

Es kann vorgesehen sein, dass der zweite Befestigungsbock eine Führungsnut aufweist, welche mit der Haltenase des zweiten Halteelements korrespondiert. Dadurch wird eine verbesserte Lastverteilung und zusätzliche Führung der Ringlasche ermöglicht, was die Belastbarkeit des Systems erhöht, und die Sicherheit verbessert.

Es kann vorgesehen sein, dass die Führungsnut des ersten Befestigungsbocks einen Eingriffsabschnitt und einen Sicherungsabschnitt aufweist, wobei sich eine Breite der Führungsnut von dem Eingriffsabschnitt hin zum Sicherungsabschnitt verjüngt, wobei die Breite des Sicherungsabschnitts derart mit der Haltenase des ersten Halteelements korrespondiert, sodass wenn sich die Ringlasche in der Montageposition befindet, die Haltenase des ersten Halteelements bei Eingreifen in dem Sicherungsabschnitt derart mit dem Sicherungsabschnitt zusammenwirkt, dass die Ringlasche gegen eine Bewegung entlang der Schwenkachse gesichert ist. Die Breite der Führungsnut im Sicherungsabschnitt korrespondiert mit der Breite der Haltenase, sodass kein bzw. wenig Spiel gesehen entlang der Schwenkachse vorhanden ist, sodass die Ringlasche insgesamt, wenn sich die Ringlasche in der Montageposition im ersten Befestigungsbock befindet, gegen eine Bewegung entlang der Schwenkachse gesichert ist.

Es kann vorgesehen sein, dass die Führungsnut des zweiten Befestigungsbocks einen Eingriffsabschnitt und einen Sicherungsabschnitt aufweist, wobei sich eine Breite der Führungsnut von dem Eingriffsabschnitt hin zum Sicherungsabschnitt verjüngt, wobei die Breite des Sicherungsabschnitts derart mit der Haltenase des zweiten Halteelements korrespondiert, sodass wenn sich die Ringlasche in der Montageposition befindet, die Haltenase des zweiten Halteelements bei Eingreifen in dem Sicherungsabschnitt derart mit dem Sicherungsabschnitt zusammenwirkt, dass die Ringlasche gegen eine Bewegung entlang der Schwenkachse gesichert ist.

Es kann vorgesehen sein, dass die Ringlasche zumindest ein Abstandshalterelement aufweist, auf welchem die Ringlasche in der Montageposition aufliegt, sodass die Halteelemente nicht auf einer Oberfläche des Gutes aufliegen. Ein weiterer Vorteil ist die Gestaltung der Ringlasche mit Abstandsnoppen, die dafür sorgen, dass die Haltenase sicher in der Aufnahmenut liegt ohne beim Schwenken um die Schwenkachse in der Führungsnut zu verkanten, wenn die Ringlasche in die Montageposition überführt wird. Gleichzeitig heben die Abstandsnoppen die Ringlasche in der Montageposition maximal von der Last ab, sodass ein sicheres Befestigen des zweiten Befestigungsbocks auch in der Nähe des zweiten Halteelements gewährleistet ist. Ohne die Abstandsnoppen würden Haltelemente der Ringlasche auf der Oberfläche des Gutes, an der der Ringbock befestigt werden soll, aufliegen.

Es kann vorgesehen sein, dass die Ringlasche und die Befestigungsböcke aus Metall gefertigt sind.

Die Aufgabe wird ebenso gelöst durch ein Verfahren zur Montage eines erfindungsgemäßen Ringbocks, wobei das Verfahren folgende Schritte in chronologischer Reihenfolge umfasst:
a) Befestigen des ersten Befestigungsbockes an einem Gut;
b) Bringen der Ringlasche in die Einführstellung;
c) Einsetzen der Ringlasche in eine eingesetzte Position der Ringlasche in dem Haltelager des ersten Befestigungsbockes;
d) Überführen der Ringlasche von der eingesetzten Position in eine Montageposition in dem Haltelager des ersten Befestigungsbockes durch Schwenken der Ringlasche um die Schwenkachse, sodass die Ringlasche gegen eine Bewegung entlang der Schwenkachse in dem ersten Befestigungsbock gesichert ist;
e) Aufbringen des zweiten Befestigungsbockes auf das zweite Halteelement der Ringlasche, sodass das zweite Halteelement in dem Haltelager des zweiten Befestigungsbockes positioniert ist;
f) Befestigen des zweiten Befestigungsbockes an dem Gut.

Nach dem Anschweißen des ersten Befestigungsbocks wird die Ringlasche beispielsweise mit der Haltenase nach unten in den ersten Befestigungsbock eingeführt. Durch das Kippen bzw. Schwenken der Ringlasche fädelt die Haltenase in die Führungsnut des ersten Befestigungsbocks ein und wird axial fixiert. Anschließend wird der zweite Befestigungsbock auf die nun beispielsweise oben liegende Haltenase der Ringlasche gelegt, wodurch er ebenfalls axial fixiert ist und befestigt werden kann.

Es kann vorgesehen sein, dass in Schritt a) der erste Befestigungsbock mittels Schweißen an dem Gut befestigt wird.

Es kann vorgesehen sein, dass in Schritt f) der zweite Befestigungsbock mittels Schweißen an dem Gut befestigt wird.

### Kurzbeschreibung der Figuren

Nachfolgend wird die Erfindung anhand von beispielhaften Zeichnungen näher erläutert. Hierbei zeigt
- Fig. 1A: einen beispielhaften Ringbock in einer Frontansicht, aufweisen eine Ringlasche mit einem ersten und zweiten Halteelement, welche Ringlasche mittels dem ersten und zweiten Haltelement in einem ersten und zweiten Befestigungsbock schwenkbar um eine Schwenkachse gelagert ist;
- Fig. 1B: den beispielhaften Ringbock aus Fig. 1 in einer seitlichen Ansicht;
- Fig. 2: den beispielhaften Ringbock aus Fig. 1 in einer Explosionsansicht, wobei das erste und das zweite Haltelement und jeweils darauf angeordnete Haltenasen zu sehen sind;
- Fig. 3A: den ersten bzw. zweiten Befestigungsbock in einer ersten Ansicht;
- Fig. 3B: den ersten bzw. zweiten Befestigungsbock in einem Schnitt A-A aus Fig. 3A, wobei eine Führungsnut mit unterschiedlichen Breiten zu sehen ist, wobei die Führungsnut jeweils mit den Haltenasen der Halteelemente korrespondiert;
- Fig. 3C: den ersten bzw. zweiten Befestigungsbock in einer Ansicht von unten;
- Fig. 4A: der beispielhafte Ringbock aus Fig. 1, wobei sich die Ringlasche in einer eingesetzten Position in dem ersten Befestigungsbock befindet;
- Fig. 4B: die Ringlasche in einer Zwischenposition bevor eine Montageposition erreichbar ist, wobei die Haltenase in einen Eingriffsabschnitt der Führungsnut eingreift;
- Fig. 4C: die Ringlasche in der Montageposition, wobei die Haltenase in den Sicherungsabschnitt der Führungsnut eingreift und so die Ringlasche gegen eine Bewegung entlang der Schwenkachse gesichert ist;
- Fig. 5A: den auf einem Gut befestigten ersten Befestigungsbock und die Ringlasche in einer Einführstellung;
- Fig. 5B-5C: die Ringlasche in einer eingesetzten Position in dem ersten Befestigungsbock;
- Fig. 5D: die Ringlasche in der Montageposition; und
- Fig. 5E: den assemblierten Ringbock, wobei der zweite Befestigungsbock auf die Ringlasche aufgesetzt und an dem Gut befestigt ist.

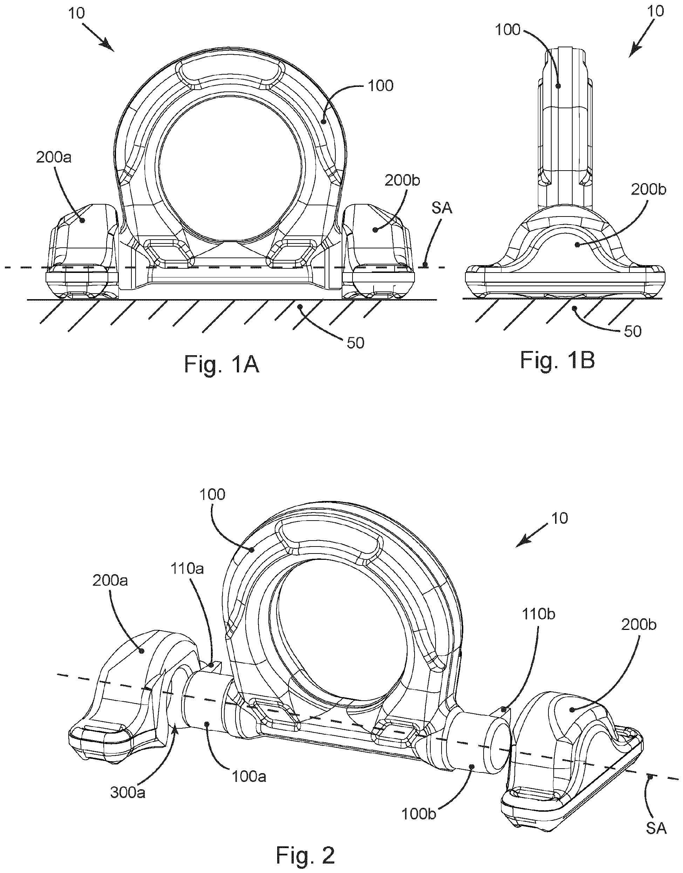

**Fig. 1** zeigt einen beispielhaften Ringbock **10** zum Anschlagen, Heben und/oder Zurren von Lasten in einer Frontansicht, wobei der Ringbock **10** eine Ringlasche **100** zum Befestigen von Lasten umfasst. **Fig. 2** zeigt den Ringbock **10** aus **Fig. 1** in einer seitlichen Ansicht.

Die Ringlasche **100** weist ein erstes Halteelement **100a** und ein zweites Halteelement **100b** auf, welche sich von der Ringlasche **100** in entgegengesetzter Richtung entlang einer gemeinsamen Schwenkachse **SA** erstrecken, wobei die Ringlasche **100** mit den Halteelementen **100a, 100b** aus einem Material einstückig gefertigt ist.

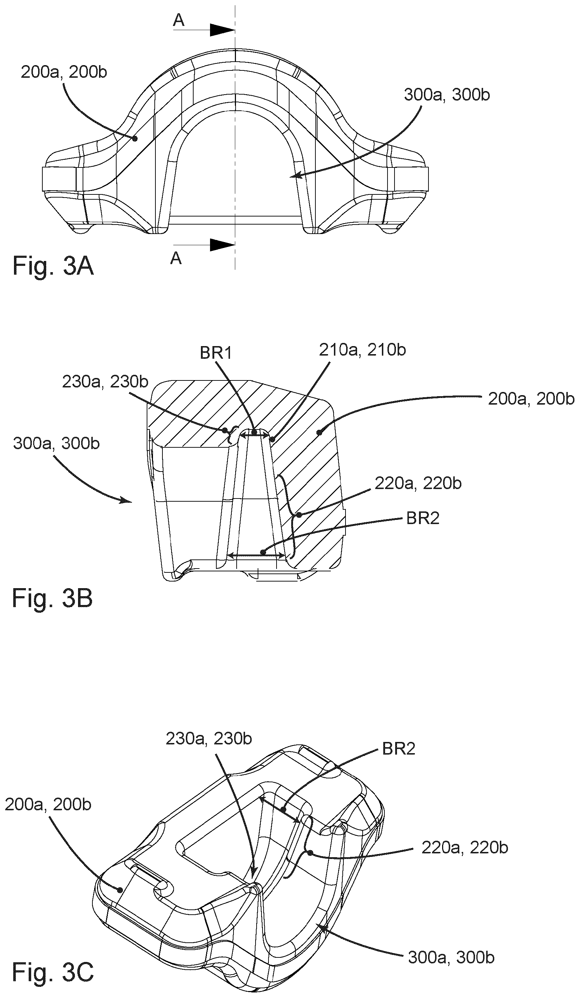

Ferner umfasst der Ringbock **10** einen ersten Befestigungsbock **200a** und einen zweiten Befestigungsbock **200b** zur Lagerung der Ringlasche **100** um die Schwenkachse SA, wobei die Befestigungsböcke **200a, 200b** an einem Gut **50** befestigbar sind, insbesondere mittels Schweißen. Die Befestigungsböcke **200a, 200b** weisen jeweils ein Haltelager **300a, 300b** für die um die Schwenkachse **SA** schwenkbaren Halteelemente **100a, 100b** der Ringlasche **100** auf. Die Haltelager **300a, 300b** sind in **Fig. 2** bzw. **Fig. 3A** bis **Fig. 3C** besser ersichtlich. Im gezeigten Beispiel sind die Ringlasche **100** und die Befestigungsböcke **200a, 200b** aus Metall gefertigt.

Wie beispielsweise in **Fig. 2** zu sehen ist, weist das erste Halteelement **100a** der Ringlasche **100** eine Haltenase **110a** auf, welche sich ausgehend von dem ersten Halteelement **100a** radial zur Schwenkachse **SA** erstreckt. Das zweite Haltelement **100b** weist im gezeigten Beispiel ebenfalls eine Haltenase **110b** auf, welche sich ausgehend von dem zweiten Haltelement **100b** radial zur Schwenkachse **SA** erstreckt.

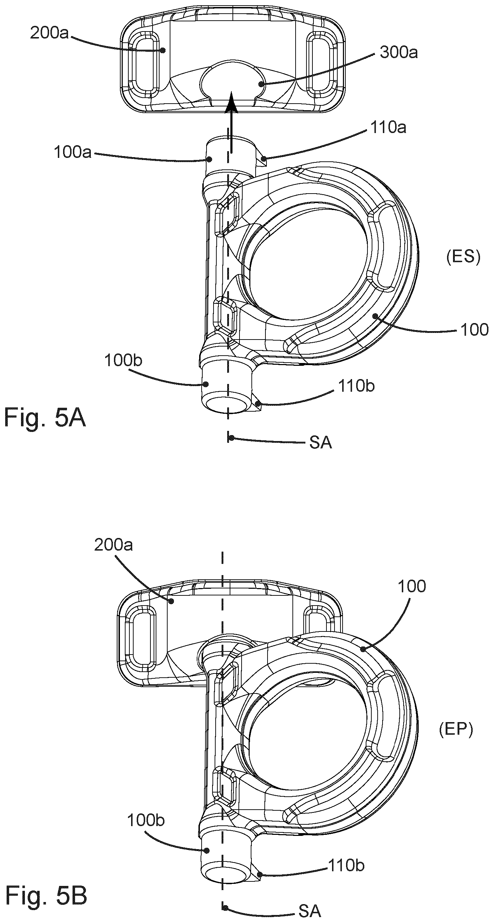

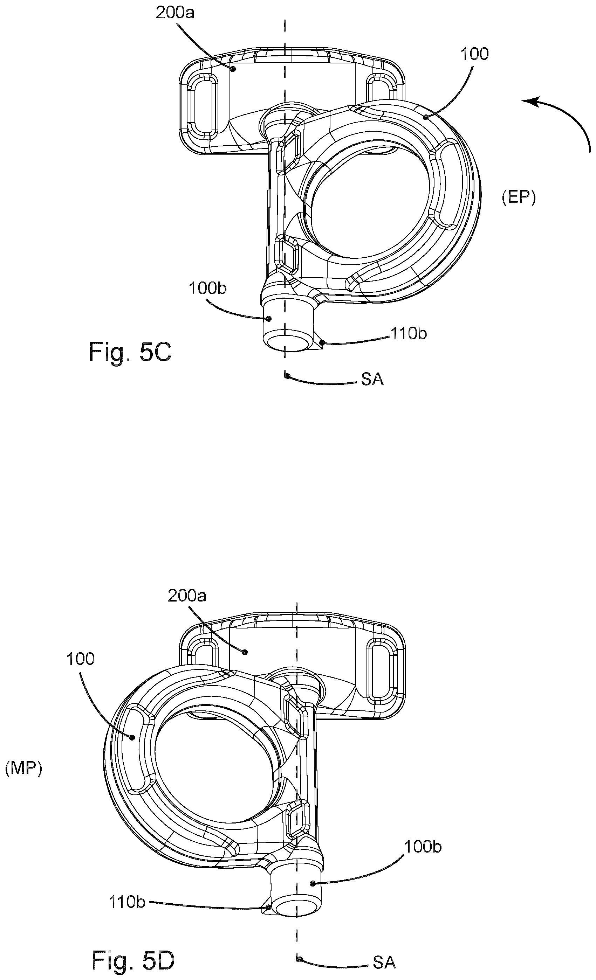

Weiters umfasst der erste Befestigungsbock **200a** eine Führungsnut **210a,** welche mit der Haltenase **110a** des ersten Haltelements **100a** derart korrespondiert, dass in einer Einführstellung **ES** der Ringlasche **100,** welche Einführstellung **ES** beispielsweise in **Fig. 5A** dargestellt ist, das erste Haltelement **100a** mit der Haltenase **110a** in das Haltelager **300a** des ersten Befestigungsbocks **200a** einführbar ist, sodass die Ringlasche **100** in eine eingesetzte Position **EP** in dem Haltelager **300a** bringbar ist, wobei in der eingesetzten Position **EP** der Ringlasche **100,** wie in **Fig. 5B** bzw. **Fig. 5C** gezeigt, in dem Haltelager **300a** durch Schwenken der Ringlasche **100** um die Schwenkachse **SA** die Ringlasche **100** in eine Montageposition MP überführbar ist, wie in **Fig. 5D** zu sehen ist.

Beim Überführen der Ringlasche **100** von der eingesetzten Position **EP** in die Montageposition **MP** greift die Haltenase **110a** in die Führungsnut **210a** des ersten Befestigungsbocks **200a** derart ein, dass die Haltenase **110a** in der Führungsnut **210a** führbar ist, sodass die Führungsnut **210a** in Kombination mit der Haltenase **110a** in der Montageposition **MP** der Ringlasche **100** die Ringlasche **100** gegen eine Bewegung entlang der Schwenkachse **SA** sichert.

Das gleiche Prinzip erfüllt die Haltenase **110b** des zweiten Halteelements **100b** mit dem zweiten Befestigungsbock **200b,** welcher ebenfalls eine Führungsnut **210b** aufweist.

In den **Fig. 3A** bis **Fig. 3C** ist der erste Befestigungsbock **200a** zusehen, wobei der zweite Befestigungsbock **200b** baugleich zum ersten Befestigungsbock ist und daher in den **Fig. 3A** bis **3C** ebenfalls zu sehen ist, wobei der dargestellte Aufbau bzw. die nachfolgenden Ausführungen hierzu auf den zweiten Befestigungsbock **200b** zutreffen. Die Führungsnut **210a** des ersten Befestigungsbocks **100a** weist einen Eingriffsabschnitt **220a** und einen Sicherungsabschnitt **230a** aufweist, wobei sich eine Breite **BR1, BR2** der Führungsnut 210a von dem Eingriffsabschnitt **220a** hin zum Sicherungsabschnitt **230a** verjüngt, wobei die Breite **BR1** des Sicherungsabschnitts **230a** derart mit der Haltenase **110a** des ersten Halteelements **100a** korrespondiert, sodass wenn sich die Ringlasche **100** in der Montageposition **MP** befindet, die Haltenase **110a** des ersten Halteelements **100a** bei Eingreifen in dem Sicherungsabschnitt **230a** derart mit dem Sicherungsabschnitt **230a** zusammenwirkt, dass die Ringlasche **100** gegen eine Bewegung entlang der Schwenkachse **SA** gesichert ist.

Wie bereits festgehalten, ist der zweite Befestigungsbock **200b** baugleich zum ersten Befestigungsbock **200a** aufgebaut. Der Vollständigkeit halber wird jedoch festgehalten, dass die Führungsnut **210b** des zweiten Befestigungsbocks **100b** einen Eingriffsabschnitt **220b** und einen Sicherungsabschnitt **230b** aufweist, wobei sich eine Breite **BR1, BR2** der Führungsnut **210b** von dem Eingriffsabschnitt **220b** hin zum Sicherungsabschnitt **230b** verjüngt, wobei die Breite **BR1** des Sicherungsabschnitts **230b** derart mit der Haltenase **110b** des zweiten Halteelements **100b** korrespondiert, sodass wenn sich die Ringlasche **100** in der Montageposition **MP** befindet, die Haltenase **110b** des zweiten Halteelements **100b** bei Eingreifen in dem Sicherungsabschnitt **230b** derart mit dem Sicherungsabschnitt **230b** zusammenwirkt, dass die Ringlasche **100** gegen eine Bewegung entlang der Schwenkachse **SA** gesichert ist.

Ferner kann die Ringlasche **100** zumindest ein Abstandshalterelement aufweisen, auf welchem die Ringlasche **100** in der Montageposition **MP** aufliegt, wobei dies in den Figuren nicht dargestellt ist.

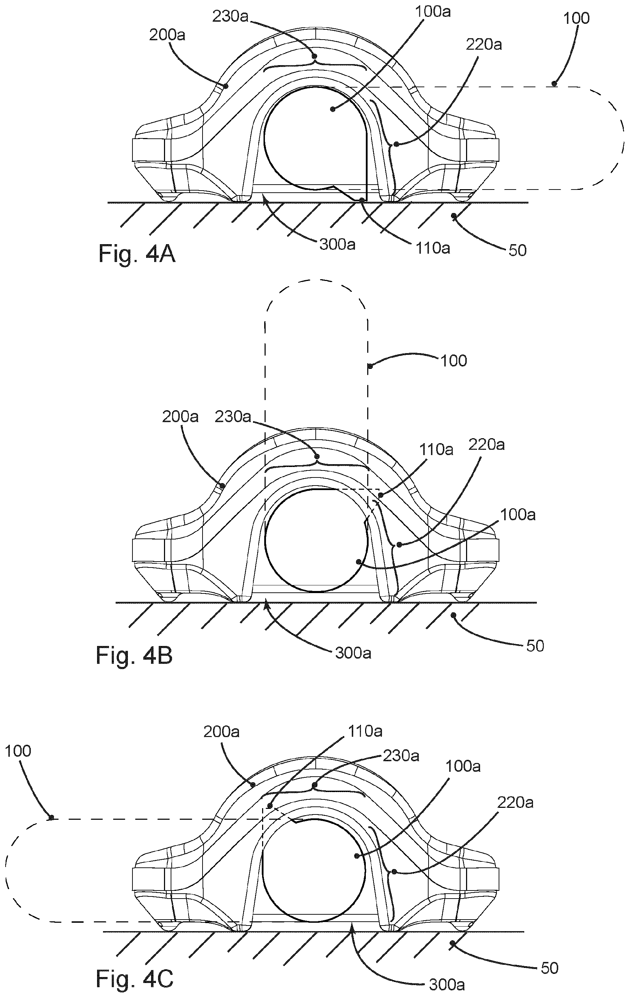

**Fig. 4A** bis **4C** zeigen das Überführen der Ringlasche von der eingesetzten Position **EP** in die Montageposition **MP.** Die Ringlasche **100** ist dabei strichliert dargestellt. In **Fig. 4A** ist die eingesetzte Position **EP** der Ringlasche **100** zu sehen, wobei das erste Halteelement **100a** mit der darauf angeordneten Haltenase **110a** in dem Haltelager **300a** eingesetzt ist. Die Ringlasche 100 musste zuvor in die Einführstellung gebracht werden, wobei die Haltenase **110a** dabei nach unten gerichtet ist, sodass das erste Halteelement **100a** vollständig in das Haltelager **300a** einführbar ist und dadurch die Ringlasche **100** in die eingesetzte Position **EP** bringbar ist.

Durch Schwenken der Ringlasche **100** um die Schwenkachse **SA** (im gezeigten Beispiel gegen den Uhrzeigersinn) greift die Haltenase **110a** in den Eingriffsabschnitt **220a** der Führungsnut **210a** ein und wird beim Weiterschwenken von der Führungsnut **210a** geführt, wie in **Fig. 4B** dargestellt.

Durch Weiterschwenken der Ringlasche **100** in die Montageposition **MP** greift die Haltenase **110a** in den Sicherungsabschnitt **230a** der Führungsnut **210a** ein, wodurch die Ringlasche **100** gegen eine Bewegung entlang der Schwenkachse gesichert ist, wie in **Fig. 4C** gezeigt. Die Sicherung ist dadurch gegeben, dass die Breite **BR1** des Sicherungsabschnitts **230a** der Führungsnut **210a** im Wesentlichen der Breite der Haltenase **110a** entspricht, sodass kein Spiel für die Haltenase **110a** entlang einer Bewegung der Schwenkachse **SA** gegeben ist.

Das gleiche Prinzip ist ebenso für die Haltenase **110b** des zweiten Halteelements **100b** mit dem zweiten Befestigungsbock **200b,** welcher ebenfalls eine Führungsnut **210b** aufweist, gegeben.

In **Fig. 5A** bis **Fig. 5E** ist weiters ein Verfahren zur Montage des Ringbocks **10,** wie zuvor beschrieben, dargestellt, wobei in einem ersten Schritt a) der erste Befestigungsbock **200a** an dem Gut **50** befestigt wird, insbesondere mittels Schweißen.

Als nächsten Schritt b) wird die Ringlasche **100** in die Einführstellung **ES** gebracht, wie in **Fig. 5A** dargestellt. Danach erfolgt in einem Schritt c) das Einsetzen der Ringlasche **100** in die eingesetzte Position **EP** der Ringlasche **100** in dem Haltelager **300a** des ersten Befestigungsbockes **200a,** wie in **Fig. 5B** gezeigt. Danach wird in einem Schritt d) die Ringlasche **100** von der eingesetzten Position **EP** in eine Montageposition **MP** in dem Haltelager **300a** des ersten Befestigungsbockes **200a** durch Schwenken der Ringlasche **100** um die Schwenkachse **SA** überführt - wie in **Fig. 5C** durch einen Pfeil angedeutet -, sodass die Ringlasche **100** gegen eine Bewegung entlang der Schwenkachse **SA** in dem ersten Befestigungsbock **200a** gesichert ist, wenn die Ringlasche **100** die Montageposition erreicht hat, wie in **Fig. 5D** gezeigt. Die Ringlasche **100** vollführt dabei eine Drehung um die Schwenkachse **SA** um ungefähr 180°.

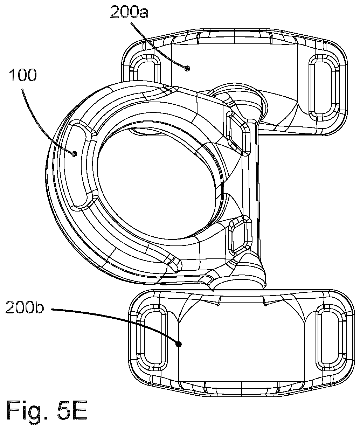

In einem nächsten Schritt e) wird der zweite Befestigungsbock **200b** auf das zweite Halteelement **100b** der Ringlasche **100** aufgebracht, sodass das zweite Halteelement **100b** in dem Haltelager **300b** des zweiten Befestigungsbockes **200b** positioniert ist, wie in **Fig. 5E** dargestellt ist. Der zweite Befestigungsbock **200b** wird hierbei durch ein Aufbringen von oben auf die Ringlasche **100** aufgesetzt.

Als nächsten Schritt f) wird der zweite Befestigungsbock **200b** an dem Gut **50** befestigt, insbesondere mittels Schweißen.

### LISTE DER BEZUGSZEICHEN

| | |
|---|---|
| Ringbock | 10 |
| Gut | 50 |
| Ringlasche | 100 |
| Erstes Halteelement | 100a |
| Zweites Halteelement | 100b |
| Haltenase | 110a, 110b |
| Erster Befestigungsbock | 200a |
| Zweiter Befestigungsbock | 200b |
| Führungsnut | 210a, 210b |
| Einführabschnitt | 220a, 220b |
| Sicherungsabschnitt | 230a, 230b |
| Haltelager | 300a, 300b |
| Breite Führungsnut | BR1, BR2 |
| Einführstellung | ES |
| Eingesetzte Position | EP |
| Montageposition | MP |
| Schwenkachse | SA |

## Patentansprüche

1. Ringbock (10) zum Anschlagen, Heben und/oder Zurren von Lasten, wobei der Ringbock (10) Folgendes umfasst:
- eine Ringlasche (100) zum Befestigen von Lasten, welche Ringlasche (100) ein erstes Halteelement (100a) und ein zweites Halteelement (100b) umfasst, welche sich von der Ringlasche (100) in entgegengesetzter Richtung entlang einer gemeinsamen Schwenkachse (SA) erstrecken, sowie
- einen ersten Befestigungsbock (200a) und einen zweiten Befestigungsbock (200b) zur Lagerung der Ringlasche (100) um die Schwenkachse (SA), wobei die Befestigungsböcke (200a, 200b) an einem Gut (50) befestigbar sind, und wobei die Befestigungsböcke (200a, 200b) jeweils ein Haltelager (300a, 300b) für die um die Schwenkachse (SA) schwenkbaren Halteelemente (100a, 100b) der Ringlasche (100) aufweisen,
**dadurch gekennzeichnet, dass**
das erste Halteelement (100a) der Ringlasche (100) eine Haltenase (110a) aufweist, welche sich ausgehend von dem ersten Halteelement (100a) radial zur Schwenkachse (SA) erstreckt,
und wobei der erste Befestigungsbock (200a) eine Führungsnut (210a) umfasst, welche mit der Haltenase (110a) des ersten Haltelements (100a) derart korrespondiert, dass
in einer Einführstellung (ES) der Ringlasche (100) das erste Haltelement (100a) mit der Haltenase (110a) in das Haltelager (300a) des ersten Befestigungsbocks (200a) einführbar ist, sodass die Ringlasche (100) in eine eingesetzte Position (EP) in dem Haltelager (300a) bringbar ist, wobei in der eingesetzten Position (EP) der Ringlasche (100) in dem Haltelager (300a) durch Schwenken der Ringlasche (100) um die Schwenkachse (SA) die Ringlasche (100) in eine Montageposition (MP) überführbar ist, wobei
beim Überführen der Ringlasche (100) von der eingesetzten Position in die Montageposition die Haltenase in die Führungsnut des ersten Befestigungsbocks derart eingreift, dass die Haltenase (110a) in der Führungsnut (210a) führbar ist, sodass die Führungsnut (210a) in Kombination mit der Haltenase (110a) in der Montageposition (MP) der Ringlasche (100) die Ringlasche (100) gegen eine Bewegung entlang der Schwenkachse (SA) sichert.

2. Ringbock nach Anspruch 1, **wobei** der erste und/oder der zweite Befestigungsbock (200a, 200b) mittels Schweißen an dem Gut (50) befestigbar ist.

3. Ringbock nach einem der vorhergehenden Ansprüche, **wobei** das zweite Haltelement (100b) eine Haltenase (110b) umfasst, welche sich ausgehend von dem zweiten Haltelement (100b) radial zur Schwenkachse (SA) erstreckt.

4. Ringbock nach Anspruch 3, **wobei** der zweite Befestigungsbock (100b) eine Führungsnut (210b) aufweist, welche mit der Haltenase (110b) des zweiten Halteelements (100b) korrespondiert.

5. Ringbock nach einem der vorhergehenden Ansprüche, **wobei** die Führungsnut (210a) des ersten Befestigungsbocks (100a) einen Eingriffsabschnitt (220a) und einen Sicherungsabschnitt (230a) aufweist, wobei sich eine Breite (BR1, BR2) der Führungsnut (210a) von dem Eingriffsabschnitt (220a) hin zum Sicherungsabschnitt (230a) verjüngt, wobei die Breite (BR1) des Sicherungsabschnitts (230a) derart mit der Haltenase (110a) des ersten Halteelements (100a) korrespondiert, sodass wenn sich die Ringlasche (100) in der Montageposition (MP) befindet, die Haltenase (110a) des ersten Halteelements (100a) bei Eingreifen in dem Sicherungsabschnitt (230a) derart mit dem Sicherungsabschnitt (230a) zusammenwirkt, dass die Ringlasche (100) gegen eine Bewegung entlang der Schwenkachse (SA) gesichert ist.

6. Ringbock nach einem der vorhergehenden Ansprüche, **wobei** die Führungsnut (210b) des zweiten Befestigungsbocks (100b) einen Eingriffsabschnitt (220b) und einen Sicherungsabschnitt (230b) aufweist, wobei sich eine Breite (BR1, BR2) der Führungsnut (210b) von dem Eingriffsabschnitt (220b) hin zum Sicherungsabschnitt (230b) verjüngt, wobei die Breite (BR1) des Sicherungsabschnitts (230b) derart mit der Haltenase (110b) des zweiten Halteelements (100b) korrespondiert, sodass wenn sich die Ringlasche (100) in der Montageposition (MP) befindet, die Haltenase (110b) des zweiten Halteelements (100b) bei Eingreifen in dem Sicherungsabschnitt (230b) derart mit dem Sicherungsabschnitt (230b) zusammenwirkt, dass die Ringlasche (100) gegen eine Bewegung entlang der Schwenkachse (SA) gesichert ist.

7. Ringbock nach einem der vorhergehenden Ansprüche, **wobei** die Ringlasche (100) mit den Halteelementen (100a, 100b) aus einem Material einstückig gefertigt ist.

8. Ringbock nach einem der vorhergehenden Ansprüche, **wobei** die Ringlasche (100) zumindest ein Abstandshalterelement aufweist, auf welchem die Ringlasche in der Montageposition aufliegt.

9. Verfahren zur Montage eines Ringbocks (10) gemäß einem der vorhergehenden Ansprüche an einem Gut (50), wobei das Verfahren folgende Schritte in chronologischer Reihenfolge umfasst:
a) Befestigen des ersten Befestigungsbockes (200a) an einem Gut (50);
b) Bringen der Ringlasche (100) in die Einführstellung (ES);
c) Einsetzen der Ringlasche (100) in eine eingesetzte Position (EP) der Ringlasche (100) in dem Haltelager (300a) des ersten Befestigungsbockes (200a);
d) Überführen der Ringlasche (100) von der eingesetzten Position (EP) in eine Montageposition (MP) in dem Haltelager (300a) des ersten Befestigungsbockes (200a) durch Schwenken der Ringlasche (100) um die Schwenkachse (SA), sodass die Ringlasche (100) gegen eine Bewegung entlang der Schwenkachse (SA) in dem ersten Befestigungsbock (200a) gesichert ist;
e) Aufbringen des zweiten Befestigungsbockes (200b) auf das zweite Halteelement (100b) der Ringlasche (100), sodass das zweite Halteelement (100b) in dem Haltelager (300b) des zweiten Befestigungsbockes (200b) positioniert ist;
f) Befestigen des zweiten Befestigungsbockes (200b) an dem Gut (50).

10. Verfahren nach Anspruch 9, wobei in Schritt a) der erste Befestigungsbock (200a) mittels Schweißen an dem Gut (50) befestigt wird.

11. Verfahren nach Anspruch 8 oder 9, wobei in Schritt f) der zweite Befestigungsbock (200b) mittels Schweißen an dem Gut (50) befestigt wird.
